# EUROPEAN PATENT SPECIFICATION

(11) **EP 0 753 490 B1**
(45) Date of publication and mention of the grant of the patent: **30.01.2002**
(21) Application number: 96111211.7
(22) Date of filing: 11.07.1996
(51) Int. Cl.: C04B 35/195, C04B 38/00

(54) **Honeycomb structural body and method of manufacturing the same**
Struktureller Wabenkörper und Verfahren zu seiner Herstellung
Corps structural en nid d'abeilles et son procédé de fabrication

(30) Priority: 12.07.1995 JP 20042495; 14.06.1996 JP 17586496
(43) Date of publication of application: 15.01.1997
(73) Proprietor: DENSO CORPORATION, Kariya-City, Aichi-Pref. (JP)
(72) Inventor: Kondo, Toshiharu, c/o Nippondenso Co., Ltd., Kariya-city, Aichi-pref. 448 (JP); Ito, Keiji, c/o Nippondenso Co., Ltd., Kariya-city, Aichi-pref. 448 (JP); Kageyama, Terutaka, c/o Nippondenso Co., Ltd., Kariya-city, Aichi-pref. 448 (JP); Obata, Takashi, c/o Nippondenso Co., Ltd., Kariya-city, Aichi-pref. 448 (JP)
(74) Representative: Winter, Brandl, Fürniss, Hübner, Röss, Kaiser, Polte Partnerschaft

(56) References cited:
- EP-A- 0 232 621
- EP-A- 0 278 749
- EP-A- 0 545 008
- EP-A- 0 549 873
- EP-A- 0 658 363
- DE-A- 3 541 372
- US-A- 4 416 675

## Description

This invention relates to a cordierite honeycomb structural body which is usable in a filter for catching particulates emitted from a diesel engine. This invention also relates to a method of manufacturing such a cordierite honeycomb structural body.

Some filters for catching particulates emitted from diesel engines use cordierite honeycomb structural bodies.

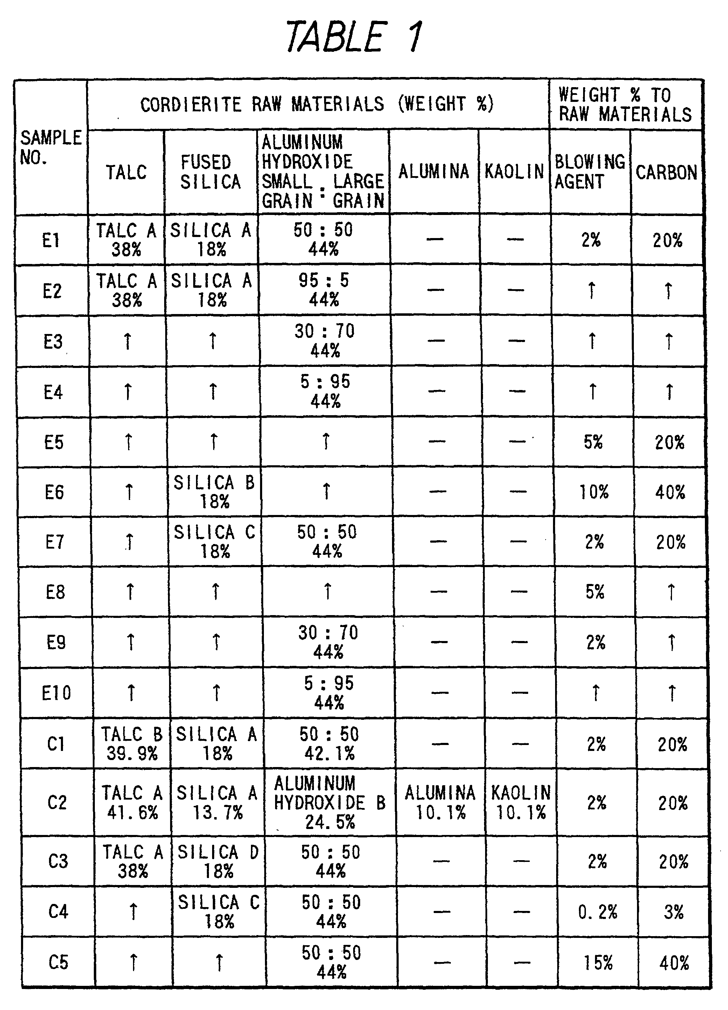

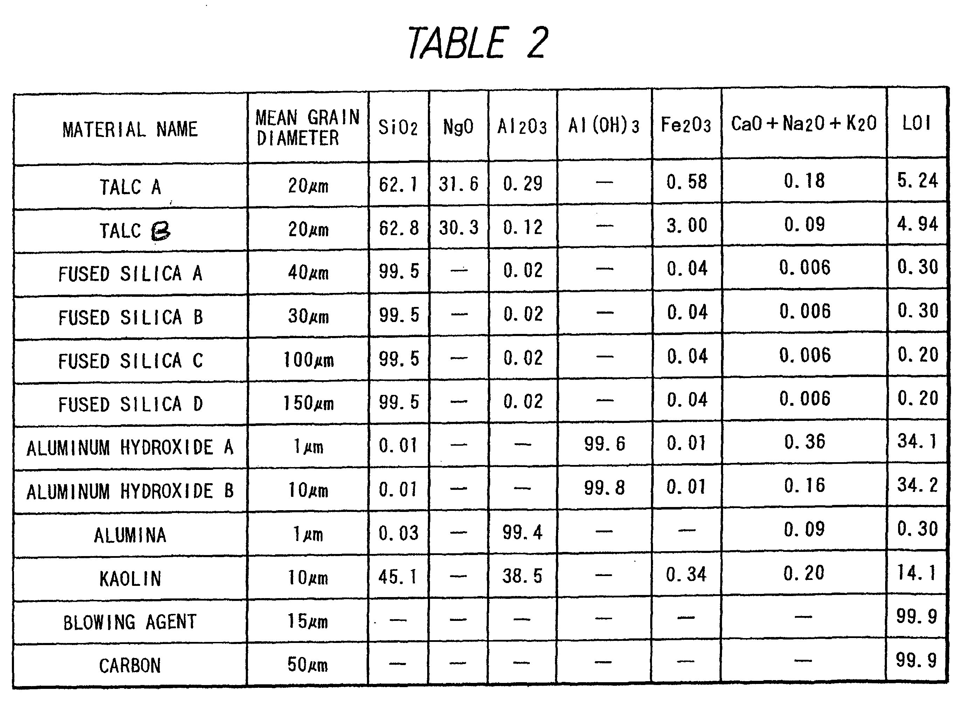

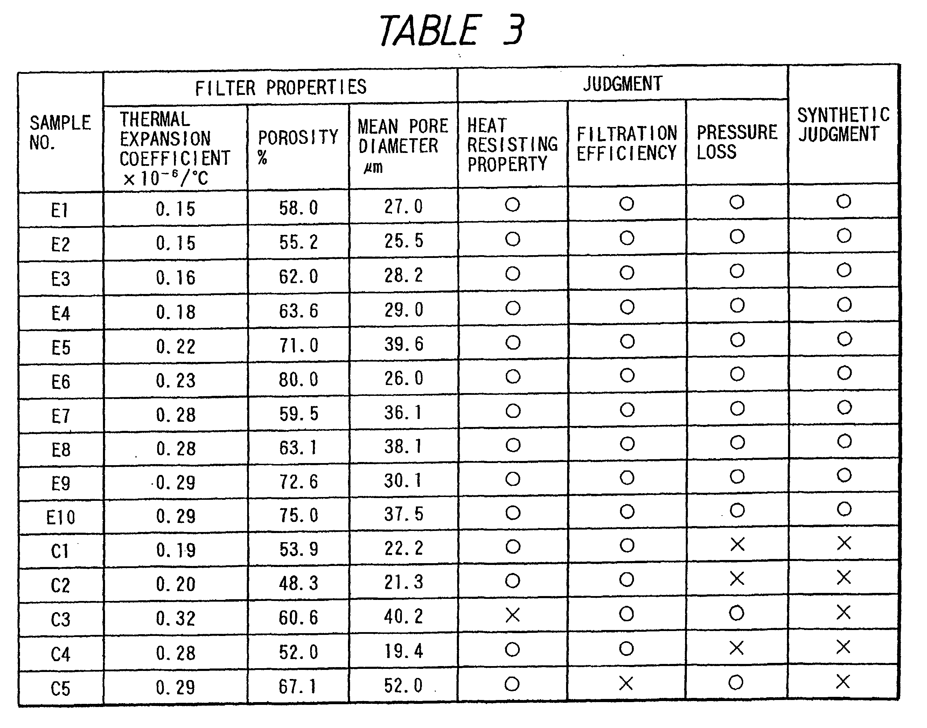

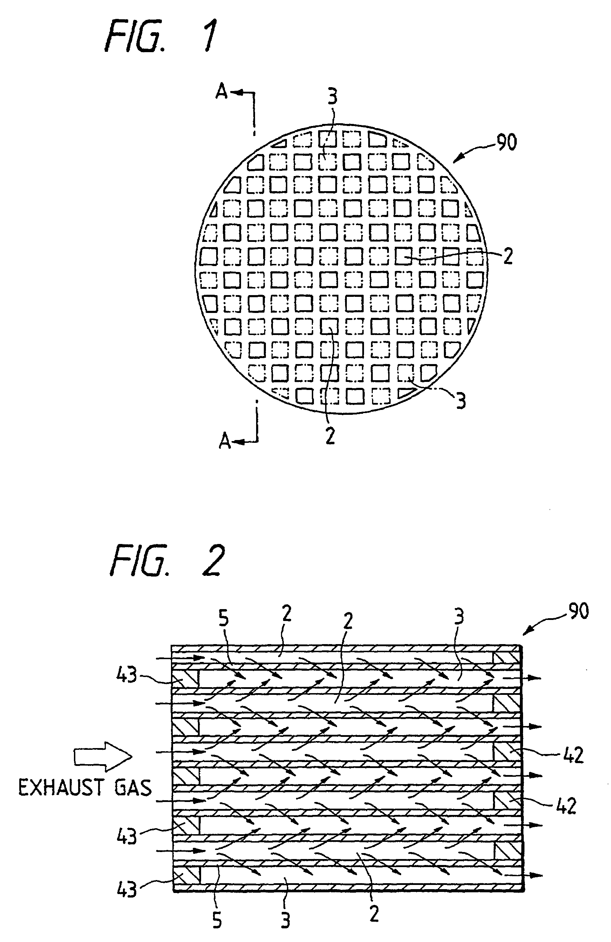

As shown in Figs. 1 and 2, a prior-art honeycomb structure body 90 has a cylindrical shape. The prior-art honeycomb structural body 90 is formed with a lot of axially-extending inlet passages 2 and outlet passages 3.

As shown in Figs. 1 and 2, upstream ends of the inlet passages 2 are open to introduce engine exhaust gas thereinto. On the other hand, downstream ends of the inlet passages 2 are blocked or closed by choking members 42. Upstream ends of the outlet passages 3 are blocked or closed by choking members 43 while downstream ends thereof are open. As shown in Figs. 1 and 2, the inlet passages 2 and the outlet passages 3 alternate with each other in a chequered pattern along a vertical direction and a horizontal direction.

Partition walls 5 defining the inlet passages 2 and the outlet passages 3 are porous. Thus, the partition walls 5 have a lot of pores.

A filter using the prior-art honeycomb structural body 90 catches particulates as follows. With reference to Fig. 2, engine exhaust gas containing particulates enters the inlet passages 2. Then, the engine exhaust gas moves from the inlet passages 2 to the outlet passages through pores in the partition walls 5 since the downstream ends of the inlet passages 2 are closed. At this time, the partition walls 5 catch particulates, and thereby cleans the engine exhaust gas. Subsequently, the cleaned engine exhaust gas flows along the outlet passages 3 before exiting from the downstream ends thereof.

It is desirable that such a filter using a honeycomb structural body meets three important requirements, that is, a requirement for a high efficiency of catch of particulates (a high filtration efficiency), a requirement for a low pressure loss, and a requirement for a low coefficient of thermal expansion.

Japanese published unexamined patent application 5-254958 corresponding to United States Patent 5,258,150 discloses a cordierite honeycomb body having a coefficient of thermal expansion of no greater than about 4 × 10⁻⁷/°C from about 25° C to about 800° C, and a total porosity of greater than about 42%.

The cordierite honeycomb body in Japanese application 5-254958 has a low coefficient of thermal expansion. Accordingly, the cordierite honeycomb body in Japanese application 5-254958 is hardly damaged by thermal expansion. The cordierite honeycomb body in Japanese application 5-254958 has a high filtration efficiency. However, it appears that the cordierite honeycomb body in Japanese application 5-254958 has a low porosity. The low porosity causes a great pressure loss.

None of other prior-art honeycomb structural bodies meets all the previously-indicated three requirements. Specifically, the other prior-art honeycomb structural bodies meet two of the three requirements but de not meet the remaining requirement.

DE-A-3 541 372 also describes the fabrication of a honeycomb cordierite structural body from talc, Al(OH)₃ and silica.

This invention has been carried out in view of such a problem in the prior-art honeycomb structural bodies. It is a first object of this invention to provide a honeycomb structural body which has a high filtration efficiency, a low pressure loss, and a low thermal expansion coefficient. It is a second object of this invention to provide a method of manufacturing such a honeycomb structural body.

A first aspect of this invention provides a honeycomb structural body having cordierite as a main component, the cordierite having a chemical composition including 45-55% SiO₂, 33-42% Al₂O₃, and 12-18% MgO by weight, the honeycomb structural body having a thermal expansion coefficient equal to or less than 0.3 × 10⁻⁶/°C from 25° C to 800° C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the large pores.

It is more preferable that the porosity is in the range of 62-75%. The above structural body should be made by using aluminium hydroxide containing small grains and large grains meeting the conditions specified in claim 1 and talc fulfiling also the requirements defined in claim 1.

A second aspect of this invention provides a method of manufacturing a honeycomb structural body having cordierite as a main component, the cordierite having a chemical composition including 45-55% SiO₂, 33-42% Al₂O₃, and 12-18% MgO by weight, the honeycomb structural body having a thermal expansion coefficient equal to or less than 0.3 × 10⁻⁶/°C from 25° C to 800° C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the Iarge pores, the method comprising the steps of preparing talc containing 0.1-0.6% Fe₂O₃ and 0.35% or less (CaO + Na₂O + K₂O) by weight; preparing aluminum hydroxide containing small grains having diameters of 0.5-3 µm and large grains having diameters of 5-15 µm, the small grains and the large grains occupying 50-100% of all grains, wherein the ratio in weight% of the large grains to the small grains is in the range of 5/95 to 50/50; preparing fused silica containing 0.01% or less (Na₂O + K₂O) by weight, and having a mean grain diameter of 30-100 µm; using the talc, the aluminum hydroxide, and the fused silica as at least part of raw materials, and mixing the talc, the aluminum hydroxide, and the fused silica into a first mixture; adding at least one of organic blowing agent and combustible substance to the first mixture, the organic blowing agent starting to foam at 100° C or lower, the combustible substance starting to burn at lower than a sintering temperature, wherein the amount of added one of the organic blowing agent and the combustible substance is equal to 5-50 weight% with respect to the raw materials; kneading and mixing the first mixture and at least one of the organic blowing agent and combustible substance into a second mixture; making the second mixture into a honeycomb shape; and sintering the second mixture in the honeycomb shape.

It is more preferable that the raw materials contain 0.7% or less Fe₂O₃ by weight.

It is more preferable that the combustible substance includes carbon.

It is more preferable that the talc, the aluminum hydroxide, and the fused silica occupy 80 weight% or more of the raw materials.

The ratio in weight% of the large grains to the small grains in the aluminum hydroxide is in the range of 5/95 to 50/50.

It is more preferable to further comprise the step of drying the second mixture in the honeycomb shape.

Fig. 1 is a front view of a prior-art honeycomb structural body.

Fig. 2 is a sectional view taken along the line A-A in Fig. 1.

Fig. 3 is a diagram of a distribution of grains in aluminum hydroxide.

Fig. 4 is a diagram of the relation between mean pore diameter and porosity.

Fig. 5 is a diagram of the relation between pore diameter and cumulative pore volume.

Fig. 6 is a diagram of pressure losses provided by samples of honeycomb structural bodies.

Basic embodiments of this invention will be described hereinafter. A basic embodiment of this invention is directed to a honeycomb structural body having cordierite as a main component, the cordierite having a chemical composition including 45-55% SiO₂, 33-42% Al₂O₃, and 12-18% MgO by weight, the honeycomb structural body having a thermal expansion coefficient equal to or less than 0.3 × 10⁻⁶/°C from 25° C to 800° C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the large pores.

The honeycomb structural body of the embodiment of this invention features that its thermal expansion coefficient is equal to or less than 0.3 × 10⁻⁶/°C from 25° C to 800° C, and its porosity is equal to 55-80%. The honeycomb structural body of the embodiment of this invention also features that its mean pore diameter is equal to 25-40 µm, and the number of the small pores equals five to forty times that of the large pores.

When the thermal expansion coefficient exceeds 0.3 × 10⁻⁶/°C from 25° C to 800° C, the heat resisting property of the honeycomb structural body tends to be poor.

When the porosity is smaller than 55%, a pressure loss provided by the honeycomb structural body tends to be high. It is preferable that the porosity is equal to or higher than 62%. When the porosity exceeds 80%, the filtration efficiency of the honeycomb structural body tends to be low. It is preferable that the porosity is equal to or less than 75%.

Regarding the pores at the surfaces of the partition walls, in the case where the number of the small pores is less than five times that of the large pores, the filtration efficiency tends to be low at an initial stage of a filtering process. In the case where the number of the small pores is greater than forty times that of the large pores, the filtration efficiency tends to be low and the product strength tends to be low.

The honeycomb structural body of the embodiment of this invention may be in the form of a cylinder having a plurality of axially-extending passages for introducing and discharging exhaust gas. The passages are defined by partition walls. Alternatively, the honeycomb structural body may be in the form of a rectangular parallelepiped, or may be in another shape. It is preferable that the passages have a quadrilateral cross-section. The passages may have a hexagonal cross-section, a triangular cross-section, or another cross-section.

Another basic embodiment of this invention is directed to a method of manufacturing a honeycomb structural body having cordierite as a main component, the cordierite having a chemical composition including 45-55% SiO₂, 33-42% Al₂O₃, and 12-18% MgO by weight, the honeycomb structural body having a thermal expansion coefficient equal to or less than 0.3 × 10⁻⁶/°C from 25° C to 800° C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the large pores, the method comprising the steps of preparing talc containing 0.1-0.6% Fe₂O₃ and 0.35% or less (CaO + Na₂O + K₂O) by weight; preparing aluminum hydroxide containing small grains having diameters of 0.5-3 µm and large grains having diameters of 5-15 µm, the small grains and the large grains occupying 50-100% of all grains, wherein the ratio in weight% of the large grains to the small grains is in the range of 5/95 to 95/5; preparing fused silica containing 0.01% or less (Na₂O + K₂O) by weight, and having a mean grain diameter of 30-100 µm; using the talc, the aluminum hydroxide, and the fused silica as at least part of raw materials, and mixing the talc, the aluminum hydroxide, and the fused silica into a first mixture; adding at least one of organic blowing agent and combustible substance to the first mixture, the organic blowing agent starting to foam at 100° C or lower, the combustible substance starting to burn at lower than a sintering temperature, wherein the amount of added one of the organic blowing agent and the combustible substance is equal to 5-50 weight% with respect to the raw materials; kneading and mixing the first mixture and at least one of the organic blowing agent and combustible substance into a second mixture; making the second mixture into a honeycomb shape; drying the second mixture in the honeycomb shape; and sintering the second mixture in the honeycomb shape.

The method according to the embodiment of this invention features that the talc, the aluminum hydroxide, and the fused silica are used as raw materials. It is preferable that neither clay (for example, kaolin) nor alumina is positively used as raw material. The method according to the embodiment of this invention features that at least one of organic blowing agent and combustible substance is added to the raw materials.

When the Fe₂O₃ content of the talc is less than 0.1 weight%, the range of sintering temperatures to provide low thermal expansion coefficients tends to be narrow. When the Fe₂O₃ content of the talc exceeds 0.6 weight%, the thermal expansion coefficient tends to be great and the firing-based densification is promoted. Accordingly, in this case, it is difficult to provide a high porosity.

When the (CaO + Na₂O + K₂O) content of the talc exceeds 0.35 weight%, the thermal expansion coefficient tends to be high.

As previously described, the aluminum hydroxide contains small grains having diameters of 0.5-3 µm and large grains having diameters of 5-15 µm. The method according to the embodiment of this invention features that the small grains and the large grains occupy 50-100% of all grains. In the case where the small grains and the large grains occupy less than 50% of all grains, it tends to be difficult to provide a desired porosity and a desired thermal expansion coefficient.

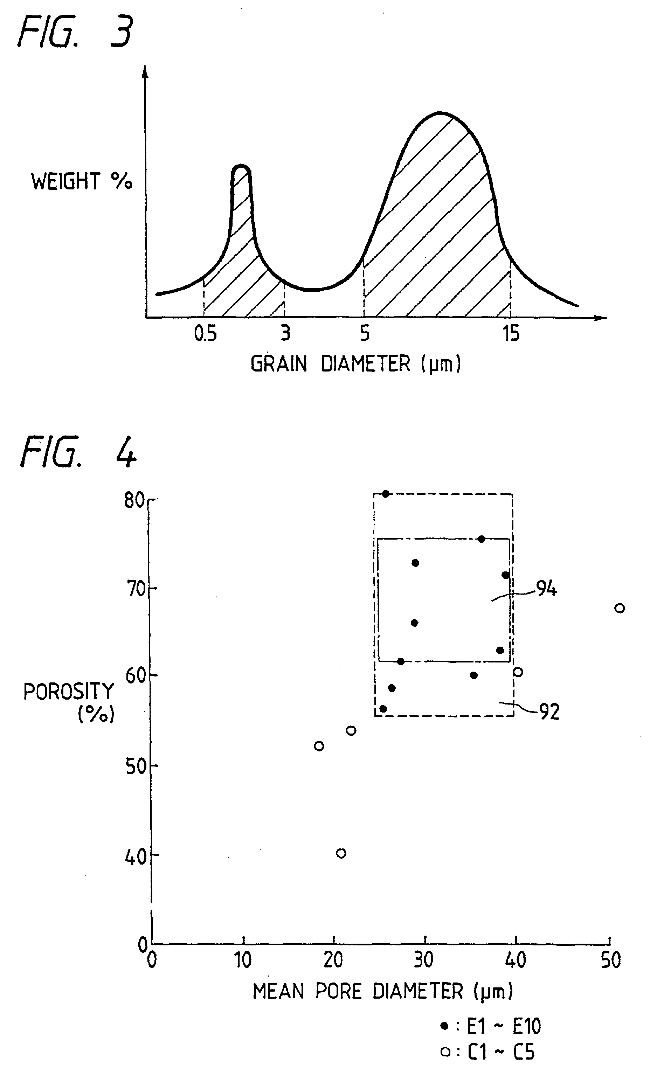

In the method according to the embodiment of this invention, the aluminum hydroxide may have a grain distribution as shown in Fig. 3. With reference to Fig. 3, the total number of small grains having diameters of 0.5-3 µm and large grains having diameters of 5-15 µm is greater than the total number of grains having other diameters.

Regarding the aluminum hydroxide, when the ratio in weight% of the large grains to the small grains is less than 5/95, the reactivity tends to be low and the thermal expansion coefficient tends to be great. It is preferable that the ratio in weight% of the large grains to the small grains is equal to 50/50 or less. When the ratio in weight% of the large grains to the small grains exceeds 95/5, it tends to be difficult to provide great pore volumes. The ratio in weight% of the large grains to the small grains is in the range of 5/95 to 50/50.

Regarding the fused silica, when its mean grain diameter is smaller than 30 µm, the total number of large pores tends to be small at the surfaces of the partition walls. When its mean grain diameter exceeds 100 µm, the strength of the honeycomb structural body tends to be low.

As previously described, at least one of organic blowing agent and combustible substance is added to the first mixture of the raw materials. The organic blowing agent is of the type starting to foam at 100° C or lower. The combustible substance is of the type starting to burn at lower than a sintering temperature. The amount of added one of the organic blowing agent and the combustible substance is equal to 5-50 weight% with respect to the raw materials. When the amount of added one of the organic blowing agent and the combustible substance is smaller than 5 weight%, the mean pore diameter tends to be excessively small. When the amount of added one of the organic blowing agent and the combustible substance is greater than 50 weight%, the mean pore diameter tends to be excessively great.

The organic blowing agent may use "Maikurosuhuuea" produced by Japanese maker "Matsumoto Ushi-Seiyaku". To enable the blowing agent to foam during the drying step, it is preferable to select the organic blowing agent from among the types starting to foam at 100° C or lower in correspondence with a heating temperature which occurs during the drying step.

In the method according to the embodiment of this invention, the combustible substance may use carbon.

In the method according to the embodiment of this invention, the step of making the second mixture into a honeycomb shape may be implemented by adding water (or other substance) to the raw materials, kneading and mixing the water and the raw materials, and extruding the resultant mixture. In this case, the resultant mixture is extruded into a honeycomb shape and is then cut to form a honeycomb structural body having a desired size.

It is preferable to dry the honeycomb structural body to evaporate the water therefrom. The drying step may be implemented by heating the honeycomb structural body at a temperature of, for example, about 80-100° C. It is preferable to suitably set the length of a time for which the honeycomb structural body remains heated.

It is preferable to implement the sintering at a temperature of, for example, 1,300-1,500° C for 5-20 hours. It is preferable to set the sintering temperature in view of the size of the honeycomb structural body. It is preferable to set the time length of the continuation of the sintering in view of the size of the honeycomb structural body.

The drying step and the sintering step may be separate steps. Alternatively, the drying step and the sintering step may be combined into a process during which the heating temperature is continuously changed from the drying temperature to the sintering temperature.

It is preferable that the Fe₂O₃ content of the raw materials is equal to or less than 0.7 weight%. In the case where the Fe₂O₃ content of the raw materials exceeds 0.7 weight% while the Fe₂O₃ content of the talc is in the range of 0.1-0.6 weight%, the thermal expansion coefficient tends to be great.

It is preferable that the talc, the aluminum hydroxide, and the fused silica occupy 80 weight% or more of the raw materials. When clay (for example, kaolin) and alumina occupy more than 20 weight% of the raw materials, it tens to be difficult to provide a high porosity.

As previously described, the honeycomb structural body of the embodiment of this invention has a thermal expansion coefficient equal to or less than 0.3 × 10⁻⁶/°C from 25° C to 800° C. Accordingly, the honeycomb structural body is excellent in heat resisting property. The honeycomb structural body does not break even when being repetitively exposed to a rapid temperature variation.

The honeycomb structural body of the embodiment of this invention has a porosity of 55-80% and a mean pore diameter of 25-40 µm. In the honeycomb structural body of the embodiment of this invention, the number of the small pores equals five to forty times that of the large pores. Accordingly, the honeycomb structural body has a high filtration efficiency and provides only a low pressure loss.

Generally, a high porosity and a large mean pore diameter are advantageous in attaining a low pressure loss. The honeycomb structural body of the embodiment of this invention has both a high porosity and a large mean pore diameter. In general, as the porosity and the mean pore diameter are excessively increased, the filtration efficiency tends to be dropped. As previously described, in the honeycomb structural body of the embodiment of this invention, pores at surfaces of the partition walls include small pores having diameters of 5-40 µm and large pores having diameters of 40-100 µm. The ratio in number between the small pores and the large pores is limited to within a given range. Accordingly, the honeycomb structural body of the embodiment of this invention has a high filtration efficiency although its porosity is high and its mean pore diameter is large.

As previously described, the honeycomb structural body of the embodiment of this invention has a high filtration efficiency, a low pressure loss, and a low thermal expansion coefficient.

In the method according to the embodiment of this invention, the talc, the aluminum hydroxide, and the fused silica are used as raw materials. Neither clay (for example, kaolin) nor alumina is positively added to the raw materials. It should be noted that clay (for example, kaolin) or alumina causes a framework of a honeycomb structural body which has only a small number of pores. In the method according to the embodiment of this invention, the fused silica and the aluminum hydroxide cause a framework of a honeycomb structural body which is more porous.

The use of the aluminum hydroxide causes the fact that water of hydration evaporates therefrom and hence many pores occur. The fused silica decomposes during the sintering process, and thus exhibits a volume reduction. The volume reduction causes may pores. Therefore, the method according to the embodiment of this invention causes a higher porosity.

The small grains in the aluminum hydroxide mainly cause pores having diameters of 0.3-0.7 µm while the large grains therein mainly cause pores having diameters of 3-7 µm. The generated pores can be controlled by suitably setting the ratio in weight% of the large grains to the small grains in the range of 5/95 to 95/5.

In the method according to the embodiment of this invention, at least one of organic blowing agent and combustible substance is added to the raw materials. It is preferable that the amount of added one of the organic blowing agent and the combustible substance is equal to 5-50 weight% with respect to the raw materials. The mean pore diameter in the honeycomb structural body can be controlled by adjusting the the amount of added one of the organic blowing agent and the combustible substance. Accordingly, it is possible to optimize the mean pore diameter.

In the method according to the embodiment of this invention, the Fe₂O₃ content of the talc is in the range of 0.1-0.6 weight%. In addition, the (CaO + Na₂O + K₂O) content of the talc is 0.35 weight% or less. The (Na₂O + K₂O) content of the fused silica is 0.01 weight% or less. Therefore, the thermal expansion coefficient of the honeycomb structural body can be equal to a very small value. Furthermore, it is possible to attain a higher porosity.

A specific embodiment of this invention will be described hereinafter. A honeycomb structural body according to an embodiment of this invention may be similar in mechanical structure to the prior-art honeycomb structural body in Figs. 1 and 2. The honeycomb structural body contains cordierite as a main component. The cordierite has a chemical composition such that SiO₂ corresponds to 45-55 weight%; Al₂O₃ corresponds to 33-42 weight%; and MgO corresponds to 12-18 weight%. The honeycomb structural body has a thermal expansion coefficient of no greater than 0.3 × 10⁻⁶/°C from 25° C to 800° C, and a porosity of 55-80%. A mean diameter of pores in the honeycomb structural body is in the range of 25-40 µm. Pores at surfaces of partition walls in the honeycomb structural body are classified into small pores having diameters of 5-40 µm and large pores having diameters of 40-100 µm. The number of the small pores equals five to forty times the number of the large pores.

Ten samples of the honeycomb structural body were fabricated E1, E2, E3, E4, E5, E6, E7, E8, E9, and E10. Inventive samples falling within the ambit claim 1 are samples E1, E2, E7 and E8. Five samples of a reference honeycomb structural body were fabricated as comparative samples C1, C2, C3, C4, and C5. Measurement was made as to a thermal expansion coefficient, a porosity, and a mean pore diameter of each of the inventive samples E1-E10 and the comparative samples C1-C5. Investigations were made as to a heat resisting property, a filtration efficiency, and a pressure loss of each of the inventive samples E1-E10 and the comparative samples C1-C5.

The inventive sample E1 was fabricated as follows. Raw materials to form cordierite were prepared. The raw materials consisted of 38% talc "A", 18% fused silica "A", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were mixed with each other. A suitable amount of water was added to the mixture of the raw materials and the additive materials. The water-added mixture of the raw materials and the additive materials was kneaded so that the raw materials, the additive materials, and water were mixed with each other. The resultant mixture of the raw materials, the additive materials, and water was extruded into a honeycomb structural member by a honeycomb extrusion molding machine. The honeycomb structural member was cut into a desired length. The resultant honeycomb structural member was heated and dried by an electronic oven so that 80% or more of water was evaporated therefrom. Then, the honeycomb structural member was continuously exposed to a flow of hot air for 12 hours. The hot air had a temperature of 80° C. Thus, the honeycomb structural member was further dried. Subsequently, the honeycomb structural member was sintered or fired at a temperature of 1,400° C for 20 hours. As a result, the honeycomb structural member was made into a honeycomb structural body corresponding to the inventive sample El.

The inventive sample E2 was fabricated as follows. Raw materials to form cordierite were prepared. The raw materials consisted of 38% talc "A", 18% fused silica "A", and 44% aluminum hydroxide by weight. The aluminum hydroxide consisted of 95% small-grain aluminum hydroxide "A" and 5% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the inventive sample E2 by steps similar to the steps in making the inventive sample E1.

The sample E3 was fabricated as follows. Raw materials to form cordierite were prepared. The raw materials consisted of 38% talc "A", 18% fused silica "A", and 44% aluminum hydroxide by weight. The aluminum hydroxide consisted of 30% small-grain aluminum hydroxide "A" and 70% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the sample E3 by steps similar to the steps in making the inventive sample E1.

The sample E4 was fabricated as follows. Raw materials to form cordierite were prepared. The raw materials consisted of 38% talc "A", 18% fused silica "A", and 44% aluminum hydroxide by weight. The aluminum hydroxide consisted of 5% small-grain aluminum hydroxide "A" and 95% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the sample E4 by steps similar to the steps in making the inventive sample E1.

The sample E5 was fabricated as follows. Raw materials to form cordierite were prepared. The raw materials consisted of 38% talc "A", 18% fused silica "A", and 44% aluminum hydroxide by weight. The aluminum hydroxide consisted of 5% small-grain aluminum hydroxide "A" and 95% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 5 weight% and 20 weight% relative to the raw materials, respectively. The raw materials and the additive materials were made into a honeycomb structural body corresponding to the inventive sample E5 by steps similar to the steps in making the inventive sample E1.

The sample E6 was fabricated as follows. Raw materials to form cordierite were prepared. The raw materials consisted of 38% talc "A", 18% fused silica "B", and 44% aluminum hydroxide by weight. The aluminum hydroxide consisted of 5% small-grain aluminum hydroxide "A" and 95% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 10 weight% and 40 weight% relative to the raw materials, respectively. The raw materials and the additive materials were made into a honeycomb structural body corresponding to the sample E6 by steps similar to the steps in making the inventive sample E1.

The inventive sample E7 was fabricated as follows. Raw materials to form cordierite were prepared. The raw materials consisted of 38% talc "A", 18% fused silica "C", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the inventive sample E7 by steps similar to the steps in making the inventive sample E1.

The inventive sample E8 was fabricated as follows. Raw materials to form cordierite were prepared. The raw materials consisted of 38% talc "A", 18% fused silica "C", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 5 weight% and 20 weight% relative to the raw materials, respectively. The raw materials and the additive materials were made into a honeycomb structural body corresponding to the inventive sample E8 by steps similar to the steps in making the inventive sample E1.

The sample E9 was fabricated as follows. Raw materials to form cordierite were prepared. The raw materials consisted of 38% talc "A", 18% fused silica "C", and 44% aluminum hydroxide by weight. The aluminum hydroxide consisted of 30% small-grain aluminum hydroxide "A" and 70% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the sample E9 by steps similar to the steps in making the inventive sample E1.

The sample E10 was fabricated as follows. Raw materials to form cordierite were prepared. The raw materials consisted of 38% talc "A", 18% fused silica "C", and 44% aluminum hydroxide by weight. The aluminum hydroxide consisted of 5% small-grain aluminum hydroxide "A" and 95% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the sample E10 by steps similar to the steps in making the inventive sample E1.

The comparative sample C1 was fabricated as follows. Raw materials to form cordierite were prepared. The raw materials consisted of 39.9% talc "B", 18% fused silica "A", and 42.1% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the comparative sample C1 by steps similar to the steps in making the inventive sample E1.

The comparative sample C2 was fabricated as follows. Raw materials to form cordierite were prepared. The raw materials consisted of 41.6% talc "A", 13.7% fused silica "A", 24.5% large-grain aluminum hydroxide "B", 10.1% alumina, and 10.1% kaolin by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the comparative sample C2 by steps similar to the steps in making the inventive sample E1.

The comparative sample C3 was fabricated as follows. Raw materials to form cordierite were prepared. The raw materials consisted of 38% talc "A", 18% fused silica "D", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 2 weight% and 20 weight% relative to the raw materials, respectively. The raw materials and the additive materials were made into a honeycomb structural body corresponding to the comparative sample C3 by steps similar to the steps in making the inventive sample E1.

The comparative sample C4 was fabricated as follows. Raw materials to form cordierite were prepared. The raw materials consisted of 38% talc "A", 18% fused silica "C", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 0.2 weight% and 3 weight% relative to the raw materials, respectively. The raw materials and the additive materials were made into a honeycomb structural body corresponding to the comparative sample C4 by steps similar to the steps in making the inventive sample E1.

The comparative sample C5 was fabricated as follows. Raw materials to form cordierite were prepared. The raw materials consisted of 38% talc "A", 18% fused silica "C", and 44% aluminum hydroxide by weight. The aluminum hydroxide consisted of 50% small-grain aluminum hydroxide "A" and 50% large-grain aluminum hydroxide "B" by weight. Additive materials were prepared. The additive materials contained combustible or inflammable substance. Specifically, the additive materials were blowing agent (foaming agent) and carbon. The blowing agent and the carbon in the additive materials were 15 weight% and 40 weight% relative to the raw materials, respectively. The raw materials and the additive materials were made into a honeycomb structural body corresponding to the comparative sample C5 by steps similar to the steps in making the inventive sample E1.

Table 1 lists the raw materials and the additive materials used in making the samples E1-E10 and the comparative samples C1-C5.

The raw materials and the additive materials used in making the inventive samples E1-E10 and the comparative samples C1-C5 had compositions (components) and other features as follows. The talc "A" contained 62.1% SiO₂, 31.6% MgO, 0.19% Al₂O₃, 0.58% Fe₂O₃, and 0.18% (CaO + Na₂O + K₂O) by weight. The talc "A" had a mean grain diameter of about 20 µm. The talc "A" had an ignition loss (loss of ignition, or LOI) of 5.24% at a temperature of 1,000° C. The talc "B" contained 62.8% SiO₂, 30.3% MgO, 0.12% Al₂O₃, 3.00% Fe₂O₃, and 0.09% (CaO + Na₂O + K₂O) by weight. The talc "B" had a mean grain diameter of about 20 µm. The talc "B" had an ignition loss of 4.94% at a temperature of 1,000° C. The fused silica "A" contained 99.5% SiO₂, 0.02% Al₂O₃, 0.04% Fe₂O₃, and 0.006% (CaO + Na₂O + K₂O) by weight. The fused silica "A" had a mean grain diameter of about 40 µm. The fused silica "A" had an ignition loss of 0.30% at a temperature of 1,000° C. The fused silica "B" contained 99.5% SiO₂, 0.02% Al₂O₃, 0.04% Fe₂O₃, and 0.006% (CaO + Na₂O + K₂O) by weight. The fused silica "B" had a mean grain diameter of about 30 µm. The fused silica "B" had an ignition loss of 0.30% at a temperature of 1,000° C. The fused silica "C" contained 99.5% SiO₂, 0.02% Al₂O₃, 0.04% Fe₂O₃, and 0.006% (CaO + Na₂O + K₂O) by weight. The fused silica "C" had a mean grain diameter of about 100 µm. The fused silica "C" had an ignition loss of 0.20% at a temperature of 1,000° C. The fused silica "D" contained 99.5% SiO₂, 0.02% Al₂O₃, 0.04% Fe₂O₃, and 0.006% (CaO + Na₂O + K₂O) by weight. The fused silica "D" had a mean grain diameter of about 150 µm. The fused silica "D" had an ignition loss of 0.20% at a temperature of 1,000° C. The small-grain aluminum hydroxide "A" contained 0.01% SiO₂, 99.6% Al(OH)₃, 0.01% Fe₂O₃, and 0.36% (CaO + Na₂O + K₂O) by weight. The small-grain aluminum hydroxide "A" had a mean grain diameter of about 1 µm. The small-grain aluminum hydroxide "A" had an ignition loss of 34.1% at a temperature of 1,000° C. The large-grain aluminum hydroxide "B" contained 0.01% SiO₂, 99.8% Al(OH)₃, 0.01% Fe₂O₃, and 0.16% (CaO + Na₂O + K₂O) by weight. The large-grain aluminum hydroxide "B" had a mean grain diameter of about 10 µm. The large-grain aluminum hydroxide "B" had an ignition loss of 34.2% at a temperature of 1,000° C. The alumina contained 0.03% SiO₂, 99.4% Al₂O₃, and 0.09% (CaO + Na₂O + K₂O) by weight. The alumina had a mean grain diameter of about 1 µm. The alumina had an ignition loss of 0.30% at a temperature of 1,000° C. The kaolin contained 45.1% SiO₂, 38.5% Al₂O₃, 0.34% Fe₂O₃, and 0.20% (CaO + Na₂O + K₂O) by weight. The kaolin had a mean grain diameter of about 10 µm. The kaolin had an ignition loss of 14.1% at a temperature of 1,000° C. The blowing agent had a mean grain diameter of about 15 µm. The blowing agent had an ignition loss of 99.9% at a temperature of 1,000° C. The carbon had a mean grain diameter of about 50 µm. The carbon had an ignition loss of 99.9% at a temperature of 1,000° C.

Regarding the raw materials and the additive materials used in making the samples E1-E10 and the comparative samples C1-C5, Table 2 lists the components, the ignition losses (the losses of ignition or LOI), and the mean grain diameters.

Measurements were made as to a thermal expansion coefficient, a porosity, and a mean pore diameter of each of the samples E1-E10 and the comparative samples C1-C5. The measurements of the thermal expansion coefficients were executed by a thermodilatometer. The measurements of the porosities and the mean pore diameters were executed in a method of mercury penetration which used a porosimeter to detect pore volumes.

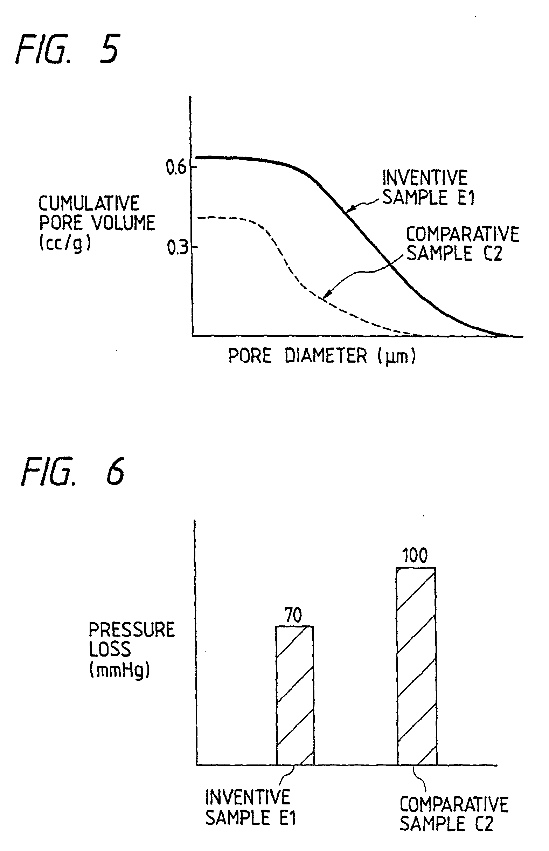

Fig. 4 shows the measured mean pore diameters and the measured porosities of the samples E1-E10 and the comparative samples C1-C5. In Fig. 4, the abscissa denotes mean pore diameter while the ordinate denotes porosity. In Fig. 4, the black small circles indicate the measured mean pore diameters and the measured porosities of the samples E1-E10 while the white small circles indicate the measured mean pore diameters and the measured porosities of the comparative samples C1-C5. With reference to Fig. 4, all the samples E1-E10 are in a preferable range 92 of mean pore diameter and porosity. Further, some of the samples E1-E10 are in a most preferable range 84 of mean pore diameter and porosity. On the other hand, all the comparative samples C1-C5 are outside the preferable range 92 of mean pore diameter and porosity.

Evaluations were made as to a heat resisting property, a filtration efficiency, and a pressure loss of each of the samples E1-E10 and the comparative samples C1-C5. The heat resisting property corresponds to sample's ability to endure stress caused by thermal expansion. The heat resisting properties of the samples E1-E10 and the comparative samples C1-C5 were evaluated on the basis of the measured thermal expansion coefficients thereof. Regarding the heat resisting properties, samples having thermal expansion coefficients of greater than 0.3 × 10⁻⁶/°C were concluded to be unacceptable while samples having thermal expansion coefficients equal to or smaller than 0.3 × 10⁻⁶/°C were concluded to be acceptable. The filtration efficiencies of the samples E1-E10 and the comparative samples C1-C5 were evaluated as follows. A filter using each of the samples was prepared. Gas containing particulates was past through the filter. Measurement was made as to the rate of a reduction in amount of particulates which was caused by the filter. Regarding the filtration efficiencies, samples corresponding to particulate reduction rates of greater than 80% were concluded to be acceptable while samples corresponding to particulate reduction rates equal to or smaller than 80% were concluded to be unacceptable. The pressure losses of the samples E1-E10 and the comparative samples C1-C5 were evaluated as follows. A filter using each of the samples was prepared. A diesel engine having a displacement of 2,200 cc was prepared. The filter remained in an exhaust passage of the diesel engine for 4 hours during which the engine continued to be operated at an engine speed of 2,000 rpm and a torque of 100 Nm. Then, a pressure loss provided by the filter was measured. Samples corresponding to pressure losses of 10 KPa or less were concluded to be acceptable while samples corresponding to pressure losses of greater than 10 KPa were concluded to be unacceptable.

The measured thermal expansion coefficient of the inventive sample E1 was equal to 0.15 × 10⁻⁶/°C. The measured porosity of the inventive sample E1 was equal to 58.0%. The measured mean pore diameter of the inventive sample E1 was equal to about 27.0 µm. The inventive sample E1 was concluded to be acceptable in all of heat resisting property, filtration efficiency, and pressure loss. Thus, the inventive sample E1 was found to be eligible by synthetic judgment.

The measured thermal expansion coefficient of the inventive sample E2 was equal to 0.15 x 10⁻⁶/°C. The measured porosity of the inventive sample E2 was equal to 55.2%. The measured mean pore diameter of the inventive sample E2 was equal to about 25.5 µm. The inventive sample E2 was concluded to be acceptable in all of heat resisting property, filtration efficiency, and pressure loss. Thus, the inventive sample E2 was found to be eligible by synthetic judgment.

The measured thermal expansion coefficient of the sample E3 was equal to 0.16 × 10⁻⁶/°C. The measured porosity of the sample E3 was equal to 62.0%. The measured mean pore diameter of the inventive sample E3 was equal to about 28.2 µm. The sample E3 was concluded to be acceptable in all of heat resisting property, filtration efficiency, and pressure loss. Thus, the sample E3 was found to be eligible by synthetic judgment.

The measured thermal expansion coefficient of the sample E4 was equal to 0.18 × 10⁻⁶/°C. The measured porosity of the inventive sample E4 was equal to 63.6%. The measured mean pore diameter of the sample E4 was equal to about 29.0 µm. The sample E4 was concluded to be acceptable in all of heat resisting property, filtration efficiency, and pressure loss. Thus, the sample E4 was found to be eligible by synthetic judgment.

The measured thermal expansion coefficient of the sample E5 was equal to 0.22 × 10⁻⁶/°C. The measured porosity of the sample E5 was equal to 71.0%. The measured mean pore diameter of the inventive sample E5 was equal to about 39.6 µm. The sample E5 was concluded to be acceptable in all of heat resisting property, filtration efficiency, and pressure loss. Thus, the sample E5 was found to be eligible by synthetic judgment.

The measured thermal expansion coefficient of the sample E6 was equal to 0.23 × 10⁻⁶/°C. The measured porosity of the sample E6 was equal to 80.0%. The measured mean pore diameter of the sample E6 was equal to about 26.0 µm. The sample E6 was concluded to be acceptable in all of heat resisting property, filtration efficiency, and pressure loss. Thus, the sample E6 was found to be eligible by synthetic judgment.

The measured thermal expansion coefficient of the inventive sample E7 was equal to 0.28 × 10⁻⁶/°C. The measured porosity of the inventive sample E7 was equal to 59.5%. The measured mean pore diameter of the inventive sample E7 was equal to about 36.1 µm. The inventive sample E7 was concluded to be acceptable in all of heat resisting property, filtration efficiency, and pressure loss. Thus, the inventive sample E7 was found to be eligible by synthetic judgment.

The measured thermal expansion coefficient of the inventive sample E8 was equal to 0.28 × 10⁻⁶/°C. The measured porosity of the inventive sample E8 was equal to 63.1%. The measured mean pore diameter of the inventive sample E8 was equal to about 38.1 µm The inventive sample E8 was concluded to be acceptable in all of heat resisting property, filtration efficiency, and pressure loss. Thus, the inventive sample E8 was found to be eligible by synthetic judgment.

The measured thermal expansion coefficient of the sample E9 was equal to 0.29 × 10⁻⁶/°C. The measured porosity of the sample E9 was equal to 72.6%. The measured mean pore diameter of the sample E9 was equal to about 30.1 µm. The sample E9 was concluded to be acceptable in all of heat resisting property, filtration efficiency, and pressure loss. Thus, the sample E9 was found to be eligible by synthetic judgment.

The measured thermal expansion coefficient of the sample E10 was equal to 0.29 × 10⁻⁶/°C. The measured porosity of the sample E10 was equal to 75.0%. The measured mean pore diameter of the sample E10 was equal to about 37.5 µm. The sample E10 was concluded to be acceptable in all of heat resisting property, filtration efficiency, and pressure loss. Thus, the sample E10 was found to be eligible by synthetic judgment.

The measured thermal expansion coefficient of the comparative sample C1 was equal to 0.19 × 10⁻⁶/°C. The measured porosity of the comparative sample C1 was equal to 53.9%. The measured mean pore diameter of the comparative sample C1 was equal to about 22.2 µm. The comparative sample C1 was concluded to be acceptable in heat resisting property and filtration efficiency. The comparative sample C1 was concluded to be unacceptable in pressure loss. Thus, the comparative sample C1 was found to be ineligible by synthetic judgment.

The measured thermal expansion coefficient of the comparative sample C2 was equal to 0.20 × 10⁻⁶/°C. The measured porosity of the comparative sample C2 was equal to 48.3%. The measured mean pore diameter of the comparative sample C2 was equal to about 21.3 µm. The comparative sample C2 was concluded to be acceptable in heat resisting property and filtration efficiency. The comparative sample C2 was concluded to be unacceptable in pressure loss. Thus, the comparative sample C2 was found to be ineligible by synthetic judgment.

The measured thermal expansion coefficient of the comparative sample C3 was equal to 0.32 × 10⁻⁶/°C. The measured porosity of the comparative sample C3 was equal to 60.6%. The measured mean pore diameter of the comparative sample C3 was equal to about 40.2 µm. The comparative sample C3 was concluded to be acceptable in filtration efficiency and pressure loss. The comparative sample C3 was concluded to be unacceptable in heat resisting property. Thus, the comparative sample C3 was found to be ineligible by synthetic judgment.

The measured thermal expansion coefficient of the comparative sample C4 was equal to 0.28 × 10⁻⁶/°C. The measured porosity of the comparative sample C4 was equal to 52.0%. The measured mean pore diameter of the comparative sample C4 was equal to about 19.4 µm. The comparative sample C4 was concluded to be acceptable in heat resisting property and filtration efficiency. The comparative sample C4 was concluded to be unacceptable in pressure loss. Thus, the comparative sample C4 was found to be ineligible by synthetic judgment.

The measured thermal expansion coefficient of the comparative sample C5 was equal to 0.29 × 10⁻⁶/°C. The measured porosity of the comparative sample C5 was equal to 67.1%. The measured mean pore diameter of the comparative sample C5 was equal to about 52.0 µm. The comparative sample C5 was concluded to be acceptable in heat resisting property and pressure loss. The comparative sample C5 was concluded to be unacceptable in filtration efficiency. Thus, the comparative sample C5 was found to be ineligible by synthetic judgment.

Regarding the samples E1-E10 and the comparative samples C1-C5, Table 3 lists the thermal expansion coefficients, the porosities, the mean pore diameters, the results of judgment as to the head resisting properties, the results of the judgment as to the filtration efficiency, the results of judgment as to the pressure losses, and the results of the synthetic judgment.

It is thought that since the comparative sample C1 uses talc having a high Fe₂O₃ content, the porosity and the mean pore diameter thereof are small. It is thought that the small porosity and the small mean pore diameter cause a high pressure loss provided by the comparative sample C1.

It is thought that since the comparative sample C2 uses more than 20 weight% kaolin and alumina as raw materials, the porosity and the mean pore diameter thereof are small. It is thought that the small porosity and the small mean pore diameter cause a high pressure loss provided by the comparative sample C2.

It is thought that since the comparative sample C3 uses fused silica having a large mean grain diameter (about 150 µm), the mean pore diameter and the thermal expansion coefficient thereof are great. It is thought that the great mean pore diameter and the great thermal expansion coefficient cause a poor heat resisting property of the comparative sample C3.

It is thought that since blowing agent and carbon (additive materials) used for the comparative sample C4 are small in weight% (3.2 weight%) relative to the raw materials, the mean pore diameter thereof is small. It is thought that the small mean pore diameter causes a high pressure loss provided by the comparative sample C4.

It is thought that since blowing agent and carbon (additive materials) used for the comparative sample C5 are great in weight% (55 weight%) relative to the raw materials, the mean pore diameter thereof is large. It is thought that the large mean pore diameter causes a low filtration efficiency of the comparative sample C5.

Fig. 5 shows the results of porosimeter-based measurement of cumulative pore volumes relative to pore diameter in the inventive sample E1 and the comparative sample C2. It is shown in Fig. 5 that the cumulative pore volume in the inventive sample E1 is remarkably greater than that in the comparative sample C2. Accordingly, it is clear that the porosity of the inventive sample E1 is higher than that of the comparative sample C2.

Fig. 6 shows pressure losses provided by the inventive sample E1 and the comparative sample C2 respectively. It is shown in Fig. 6 that the pressure loss provided by the inventive sample E1 is smaller than that by the comparative sample C2 by about 30%.

## Claims

1. A honeycomb structural body of cordierite , the cordierite having a chemical composition including 45-55% SiO₂, 33-42% Al₂O₃, and 12-18% MgO by weight, the honeycomb structural body having a thermal expansion coefficient equal to or less than 0.3 x 10 ⁻⁶/°C from 25°C to 800°C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the large pores, being made by a method comprising the steps of:
Preparing talc containing 0.1 - 0.6% Fe₂O₃ and 0.35% or less (CaO + Na₂O + K₂O) by weight;
preparing aluminum hydroxide containing small grains having diameters of 0.5 - 3 µm and large grains having diameters of 5-15 µm, the small grains and large grains occupying 50 - 100% of all grains, wherein the ratio in weight% of the large grains to the small grains is in the range of 5/95 to 50/50;
preparing fused silica containing 0.01% or less (Na₂O + K₂O) by weight, and having a mean grain diameter of 30 - 100 µm;
using the talc, the aluminum hydroxide, and the fused silica as at least part of raw materials, kaolin and alumina being also part of the raw materials, the kaolin plus the alumina being less than 20% by weight and mixing said raw materials into a first mixture;
adding at least one of organic blowing agent and combustible substance to the first mixture, the organic blowing agent starting to foam at 100°C or lower, the combustible substance starting to burn at lower than a sintering temperature, wherein the amount of said added one of the organic blowing agent and the combustible substance is equal to 5-50 weight% with respect to the raw materials;
kneading and mixing the first mixture and said at least one of the organic blowing agent and combustible substance into a second mixture;
making the second mixture into a honeycomb shape; and sintering the second mixture in the honeycomb shape.

2. A honeycomb structural body as recited in claim 1, wherein the porosity is in the range of 62-75%.

3. A honeycomb structural body as recited in claim 1 and/or claim 2, being made by using the talc, the aluminum hydroxide, and the fused silica as at least 80% of raw materials.

4. A method of manufacturing a honeycomb structural body of cordierite, the cordierite having a chemical composition including 45-55% SiO₂, 33-42% Al₂O₃, and 12-18% MgO by weight, the honeycomb structural body having a thermal exspansion coefficient equal to or less than 0.3 x 10⁻⁶/°C from 25°C to 800°C, the honeycomb structural body having a porosity of 55-80%, the honeycomb structural body having a mean pore diameter of 25-40 µm, the honeycomb structural body including partition walls, wherein pores at surfaces of the partition walls include small pores having diameters of 5-40 µm and large pores having diameters of 40-100 µm, and wherein the number of the small pores equals five to forty times that of the large pores, the method comprising the steps of:
Preparing talc containing 0.1 - 0.6% Fe₂O₃ and 0.35% or less (CaO + Na₂O + K₂O) by weight;
preparing aluminum hydroxide containing small grains having diameters of 0.5 - 3 µm and large grains having diameters of 5-15 µm, the small grains and the large grains occupying 50 - 100% of all grains, wherein the ratio in weight% of the large grains to the small grains is in the range of 5/95 to 50/50;
preparing fused silica containing 0.01% or less (Na₂O + K₂O) by weight, and having a mean grain diameter of 30 - 100 µm;
using the talc, the aluminum hydroxide, and the fused silica as at least part of raw materials, kaolin and alumina being also part of the raw materials, the kaolin plus the alumina being less than 20% by weight and mixing said raw materials into a first mixture;
adding at least one of organic blowing agent and combustible substance to the first mixture, the organic blowing agent starting to foam at 100°C or lower, the combustible substance starting to burn at lower than a sintering temperature, wherein the amount of said added one of the organic blowing agent and the combustible substance is equal to 5-50 weight% with respect to the raw materials;
kneading and mixing the first mixture and said at least one of the organic blowing agent and combustible substance into a second mixture;
making the second mixture into a honeycomb shape; and sintering the second mixture in the honeycomb shape.

5. A method as recited in claim 4, wherein the raw materials contain 0.7% or less Fe₂O₃ by weight.

6. A method as recited in claim 4 or claim 5, wherein the combustible substance includes carbon.

7. A method as recited in any of claims 4 to 6, wherein the porosity is in the range of 62-75%.

8. A method as recited in any of claims 4 to 7, further comprising the step of drying the second mixture in the honeycomb shape.

9. A method as recited in any of claims 4 to 8, wherein the talc, the aluminum hydroxide, and the fused silica is used as at least 80% of raw materials.

## Patentansprüche

1. Wabenstrukturkörper aus Cordierit, wobei der Cordierit eine chemische Zusammensetzung besitzt, welche 45-55 Gew.-% an SiO₂, 33-42 Gew.-% an Al₂O₃ und 12-18 Gew.-% an MgO einschließt, der Wabenstrukturkörper einen thermischen Ausdehnungskoeffizienten besitzt, der von 25°C bis 800°C gleich oder kleiner als 0,3 x 10⁻⁶/°C ist, der Wabenstrukturkörper eine Porosität von 55-80% besitzt, der Wabenstrukturkörper einen mittleren Porendurchmesser von 25-40 µm besitzt, der Wabenstrukturkörper Trennwände einschließt, wobei Poren auf Oberflächen der Trennwände kleine Poren mit Durchmessern von 5-40 µm und große Poren mit Durchmessern von 40-100 µm einschließt, und wobei die Anzahl der kleinen Poren gleich fünf bis vierzig mal die der großen Poren ist, der hergestellt wird mittels eines Verfahrens, welches die folgenden Schritte umfaßt:
Herstellen von Talk, der 0,1-0,6 Gew.-% an Fe₂O₃ und 0,35 Gew.-% oder weniger an (CaO + Na₂O + K₂O) enthält;
Herstellen von Aluminumhydroxid, welches kleine Körner mit Durchmessern von 0,5-3 µm und große Körner mit Durchmessern von 5-15 µm enthält, wobei die kleinen Körner und großen Körner 50-100% aller Körner ausmachen, wobei das Verhältnis der großen Körner zu den kleinen Körnern in Gew.-% im Bereich von 5/95 bis 50/50 liegt;
Herstellen von Quarzgut, welches 0,01 Gew.-% oder weniger an (Na₂O + K₂O) enthält und einen mittleren Korndurchmesser von 30-100 µm besitzt;
Verwenden des Talks, des Aluminiumhydroxids und des Quarzguts als zumindest einen Teil der Rohmaterialien, wobei Kaolin und Aluminiumoxid ebenfalls ein Teil der Rohmaterialien sind, wobei das Kaolin plus das Aluminiumoxid weniger als 20 Gew.-% ausmachen, und Mischen der Rohmaterialien zu einer ersten Mischung;
Zugeben von mindestens einer Substanz, von einem organischen Treibmittel und einer brennbaren Substanz, zu der ersten Mischung, wobei das organische Treibmittel bei 100°C oder weniger zum Schäumen beginnt, die brennbare Substanz unterhalb einer Sintertemperatur zu Brennen beginnt, wobei die Menge der zugegebenen Substanz, von dem organischen Treibmittel und der brennbaren Substanz, gleich 5-50 Gew.-% bezogen auf die Rohmaterialien beträgt;
Kneten und Mischen der ersten Mischung und der mindestens einen Substanz, von dem organischen Treibmittel und der brennbaren Substanz, zu einer zweiten Mischung;
Bringen der zweiten Mischung in eine Wabengestalt; und Sintern der zweiten Mischung in der Wabengestalt.

2. Wabenstrukturkörper nach Anspruch 1, wobei die Porosität im Bereich von 62-75% liegt.

3. Wabenstrukturkörper nach Anspruch 1 und/oder Anspruch 2, der hergestellt ist unter Verwendung des Talks, des Aluminiumhydroxids und des Quarzguts als mindestens 80% der Rohmaterialien.

4. Verfahren zur Herstellung eines Wabenstrukturkörpers aus Cordierit, wobei der Cordierit eine chemische Zusammensetzung besitzt, welche 45-55 Gew.-% an SiO₂, 33-42 Gew.-% an Al₂O₃ und 12-18 Gew.-% an MgO einschließt, der Wabenstrukturkörper einen thermischen Ausdehnungskoeffizienten besitzt, der von 25°C bis 800°C gleich oder kleiner als 0,3 x 10⁻⁶/°C ist, der Wabenstrukturkörper eine Porosität von 55-80% besitzt, der Wabenstrukturkörper einen mittleren Porendurchmesser von 25-40 µm besitzt, der Wabenstrukturkörper Trennwände einschließt, wobei Poren auf Oberflächen der Trennwände kleine Poren mit Durchmessern von 5-40 µm und große Poren mit Durchmessern von 40-100 µm einschließt, und wobei die Anzahl der kleinen Poren gleich fünf bis vierzig mal die der großen Poren ist, wobei das Verfahrens die folgenden Schritte umfaßt:
Herstellen von Talk, der 0,1-0,6 Gew.-% an Fe₂O₃ und 0,35 Gew.-% oder weniger an (CaO + Na₂O + K₂O) enthält;
Herstellen von Aluminumhydroxid, welches kleine Körner mit Durchmessern von 0,5-3 µm und große Körner mit Durchmessern von 5-15 µm enthält, wobei die kleinen Körner und die großen Körner 50-100% aller Körner ausmachen, wobei das Verhältnis der großen Körner zu den kleinen Körnern in Gew.-% im Bereich von 5/95 bis 50/50 liegt;
Herstellen von Quarzgut, welches 0,01 Gew.-% oder weniger an (Na₂O + K₂O) enthält und einen mittleren Korndurchmesser von 30-100 µm besitzt;
Verwenden des Talks, des Aluminiumhydroxids und des Quarzguts als zumindest einen Teil der Rohmaterialien, wobei Kaolin und Aluminiumoxid ebenfalls ein Teil der Rohmaterialien sind, wobei das Kaolin plus das Aluminiumoxid weniger als 20 Gew.-% ausmachen, und Mischen der Rohmaterialien zu einer ersten Mischung;
Zugeben von mindestens einer Substanz, von einem organischen Treibmittel und einer brennbaren Substanz, zu der ersten Mischung, wobei das organische Treibmittel bei 100°C oder weniger zum Schäumen beginnt, die brennbare Substanz unterhalb einer Sintertemperatur zu Brennen beginnt, wobei die Menge der zugegebenen Substanz, von dem organischen Treibmittel und der brennbaren Substanz, gleich 5-50 Gew.-% bezogen auf die Rohmaterialien beträgt;
Kneten und Mischen der ersten Mischung und der mindestens einen Substanz, von dem organischen Treibmittel und der brennbaren Substanz, zu einer zweiten Mischung;
Bringen der zweiten Mischung in eine Wabengestalt; und Sintern der zweiten Mischung in der Wabengestalt.

5. Verfahren nach Anspruch 4, wobei die Rohmaterialien 0,7 Gew.-% oder weniger an Fe₂O₃ enthalten.

6. Verfahren nach Anspruch 4 oder Anspruch 5, wobei die brennbare Substanz Kohlenstoff einschließt.

7. Verfahren nach einem der Ansprüche 4 bis 6, wobei die Porosität im Bereich von 62-75% liegt.

8. Verfahren nach einem der Ansprüche 4 bis 7, welches ferner den Schritt des Trocknens der zweiten Mischung in der Wabengestalt umfaßt.

9. Verfahren nach einem der Ansprüche 4 bis 8, wobei der Talk, das Aluminiumhydroxid und das Quarzgut als mindestens 80% der Rohmaterialien verwendet werden.

## Revendications

1. Elément de structure en nids d'abeilles de cordiérite, la cordiérite présentant une composition chimique comprenant, en poids, 45 à 55 % de SiO₂, 33 à 42 % de Al₂O₃ et 12 à 18 % de MgO, l'élément de structure en nids d'abeilles présentant un coefficient de dilatation thermique inférieur ou égal à 0,3 × 10-6/°C de 25 °C à 800 °C, l'élément de structure en nids d'abeilles présentant une porosité de 55 à 80 %, l'élément de structure en nids d'abeilles présentant un diamètre de pores moyen de 25 à 40 µm, l'élément de structure en nids d'abeilles comportant des parois de séparation, où les pores aux surfaces des parois de séparation comprennent des petits pores ayant des diamètres de 5 à 40 µm et des grands pores ayant des diamètres de 4 à 100 µm, et où le nombre des petits pores est égal à 5 à 40 fois celui des grands pores, qui est préparé par un procédé comprenant les étapes consistant à :
préparer du talc contenant, en poids, 0,1 à 0,6 % de Fe₂O₃ et 0,35 % ou moins de (CaO + Na₂O + K₂O) ;
préparer de l'hydroxyde d'aluminium contenant des petits grains ayant des diamètres de 0,5 à 3 µm et des grands grains ayant des diamètres de 5 à 15 µm, les petits gains et les grands grains représentant de 5 à 100 % de tous les grains, le rapport en pourcentage en poids des grands grains aux petits grains étant dans la gamme de 5/95 à 50/50 ;
préparer de la silice fondue contenant, en poids, 0,01 % ou moins de (Na₂O + K₂O), et présentant un diamètre de grains moyen de 30 à 100 µm ;
utiliser le talc, l'hydroxyde d'aluminium et la silice fondue au moins en tant que partie des matières premières, du kaolin et de l'alumine faisant également partie des matières premières, le kaolin et l'alumine combinés représentant moins de 20 % en poids et mélanger lesdites matières premières pour former un premier mélange ;
ajouter au moins un élément choisi dans le groupe constitué par un agent d'expansion organique et une substance combustible au premier mélange, l'agent d'expansion organique commençant à effectuer l'expansion à 100 °C ou moins, la substance combustible commençant à brûler à une température inférieure à la température de frittage, la quantité dudit élément ajouté choisi dans le groupe constitué par l'agent d'expansion organique et la substance combustible étant de 5 à 50 % en poids par rapport aux matières premières ;
malaxer et mélanger le premier mélange et ledit élément, au moins au nombre d'un, choisi dans le groupe constitué par l'agent d'expansion organique et la substance combustible pour former un second mélange ;
mettre le second mélange sous une forme en nids d'abeilles ; et fritter le second mélange sous la forme en nids d'abeilles.

2. Elément de structure en nids d'abeilles selon la revendication 1, dans lequel la porosité est dans la gamme de 62 à 75 %.

3. Elément de structure en nids d'abeilles selon la revendication 1 et/ou la revendication 2, que l'on prépare en utilisant le talc, l'hydroxyde d'aluminium et la silice fondue en une quantité représentant au moins 80 % des matières premières.

4. Procédé de fabrication d'un élément de structure en nids d'abeilles de cordiérite, la cordiérite présentant une composition chimique comprenant, en poids, 45 à 55 % de SiO₂, 33 à 42 % de Al₂O₃ et 12 à 18 % de MgO, l'élément de structure en nids d'abeilles présentant un coefficient de dilatation thermique inférieur ou égal à 0,3 × 10⁻⁶/°C de 25 °C à 800 °C, l'élément de structure en nids d'abeilles présentant une porosité de 55 à 80 %, l'élément de structure en nids d'abeilles présentant un diamètre de pores moyen de 25 à 40 µm, l'élément de structure en nids d'abeilles comportant des parois de séparation, où les pores aux surfaces des parois de séparation comprennent des petits pores ayant des diamètres de 5 à 40 µm et des grands pores ayant des diamètres de 4 à 100 µm, et où le nombre des petits pores est égal à 5 à 40 fois celui des grands pores, le procédé comprenant les étapes consistant à :
préparer du talc contenant, en poids, 0,1 à 0,6 % de Fe₂O₃ et 0,35 % ou moins de (CaO + Na₂O + K₂O) ;
préparer de l'hydroxyde d'aluminium contenant des petits grains ayant des diamètres de 0,5 à 3 µm et des grands grains ayant des diamètres de 5 à 15 µm, les petits gains et les grands grains représentant de 5 à 100 % de tous les grains, le rapport en pourcentage en poids des grands grains aux petits grains étant dans la gamme de 5/95 à 50/50 ;
préparer de la silice fondue contenant, en poids, 0,01 % ou moins de (Na₂O + K₂O), et présentant un diamètre de grains moyen de 30 à 100 µm ;
utiliser le talc, l'hydroxyde d'aluminium et la silice fondue au moins en tant que partie des matières premières, du kaolin et de l'alumine faisant également partie des matières premières, le kaolin et l'alumine combinés représentant moins de 20 % en poids et mélanger lesdites matières premières pour former un premier mélange ;
ajouter au moins un élément choisi dans le groupe constitué par un agent d'expansion organique et une substance combustible au premier mélange, l'agent d'expansion organique commençant à effectuer l'expansion à 100 °C ou moins, la substance combustible commençant à brûler à une température inférieure à la température de frittage, la quantité dudit élément ajouté choisi dans le groupe constitué par l'agent d'expansion organique et la substance combustible étant de 5 à 50 % en poids par rapport aux matières premières ;
malaxer et mélanger le premier mélange et ledit élément, au moins au nombre d'un, choisi dans le groupe constitué par l'agent d'expansion organique et la substance combustible pour former un second mélange ;
mettre le second mélange sous une forme en nids d'abeilles ; et fritter le second mélange sous la forme en nids d'abeilles.

5. Procédé selon la revendication 4, dans lequel les matières premières contiennent 0,7 % en poids ou moins de Fe₂O₃.

6. Procédé selon la revendication 4 ou la revendication 5, dans lequel la substance combustible englobe du carbone.

7. Procédé selon l'une quelconque des revendications 4 à 6, dans lequel la porosité est dans la gamme de 62 à 75 %.

8. Procédé selon l'une quelconque des revendications 4 à 7, comprenant en outre l'étape consistant à sécher le second mélange sous la forme en nids d'abeilles.

9. Procédé selon l'une quelconque des revendications 4 à 8, dans lequel on utilise le talc, l'hydroxyde d'aluminium et la silice fondue en une quantité représentant au moins 80 % des matières premières.
